# EUROPEAN PATENT APPLICATION

(11) **EP 3 187 066 A1**
(43) Date of publication of application: **05.07.2017**
(21) Application number: 16194354.3
(22) Date of filing: 18.10.2016
(51) Int. Cl.: A45C 5/03, A45C 5/14, B32B 5/00, A45C 5/02

(54) **CARRY-ON LUGGAGE**

(30) Priority: 28.12.2015 WO PCT/CN2015/099159
(71) Applicant: Quest Composite Technology Corporation, Dongguan City, Guangdong 523723 (CN)
(72) Inventor: LIAO, Yuan-Hong, Dongguan City Guangdong 523723 (CN); WU, Su-Chun, Dongguan City Guangdong 523723 (CN)
(74) Representative: Straus, Alexander

(57) **Abstract**

A carry-on luggage (1) includes a housing (2) composed of a right half shell (2A) and a left half shell (2B), each half shell (2A,2B) including a base layer (22) made from a thermosetting polymeric material (TS) by molding and a protective layer (24) made from a thermoplastic polymeric material (TP) and molded on the outer surface (222) of the base layer (22). Thus, the housing (2) of the carry-on luggage (I) has excellent impact resistance and toughness.

## Description

### BACKGROUND OF THE INVENTION

### 1. Field of the Invention

The present invention relates to shoe technology and more particularly, to storage container technology and more particularly, to a carry-on luggage with impact resistance.

### 2. Description of the Related Art

The base layers of the housings of currently commercially available hard shell carry-on luggage are made by molding. After molding, the surface will be uneven and needed to be polished and then coated with a layer of coating so that the surface can be smooth and shiny. However, this processing procedure is quite complicated and time-consuming. Further, regular carry-on luggages commonly have poor impact resistance, they tend to crack or deform due to accidental impact during transportation. Therefore, how to improve the above problem is an important issue.

### SUMMARY OF THE INVENTION

The present invention has been accomplished under the circumstances in view. It is the main object of the present invention to provide a carry-on luggage, which has excellent impact resistance and is practical for high efficient manufacturing.

To achieve this and other objects of the present invention, a carry-on luggage comprises a housing, a plurality of wheels and a handle. The housing comprises a base layer and a protective layer. The base layer is made from a thermosetting polymeric material (TS). The protective layer is made from a thermoplastic polymeric material (TP), and covered over at least one surface of the base layer.

Preferably, the protective layer is covered over the outer surface of the base layer.

Preferably, the housing of the carry-on luggage further comprises a protective layer arranged on an inner surface of the base layer.

Preferably, the protective layer is also made from the thermoplastic polymeric material (TP).

Further, the thermosetting polymeric material (TS) can be epoxy or polyester.

Preferably, the base layer has contained therein carbon fibers.

Further, the thermoplastic polymeric material (TP) is selected from the group of acrylonitrile-butadiene-styrene (ABS), polypropylene (PP), polycarbonate (PC), polyethylene (PE), thermoplastic Polyurethane (TPU), polyamide (PA) and their composites.

Preferably, the base layer is composed of multiple layers.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a schematic drawing illustrating a carry-on luggage embodying the present invention.
FIG 2 is a sectional view taken along line 2-2 of FIG 1.
FIG 3 is an enlarged view of Part A of FIG. 2, illustrating the arrangement of the base layer and the protective layer.
FIG 4 is similar to FIG 3, illustrating a multilayer configuration of the base layer.
FIG. 5 is a sectional view of a part of a carry-on luggage in accordance with a second embodiment of the present invention, illustrating two protective layers respectively arranged on opposing inner and outer surfaces of a base layer.
FIG 6 is similar to FIG 5, illustrating a multilayer configuration of the base layer.

### DETAILED DESCRIPTION OF THE INVENTION

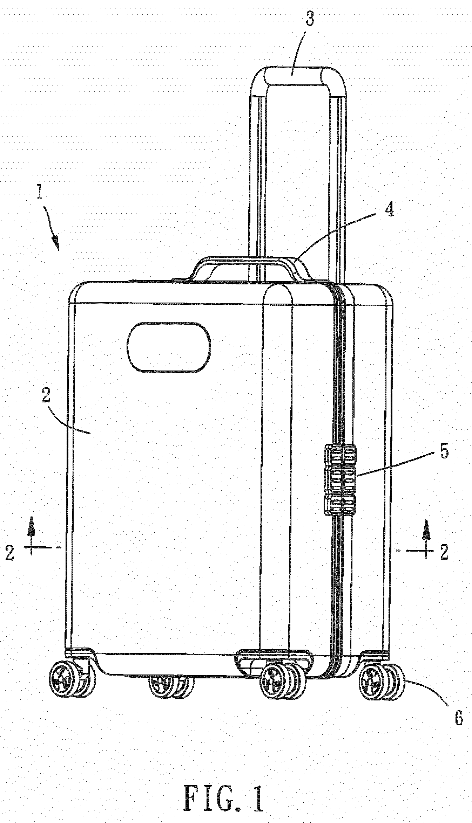

Referring to FIG. 1, a carry-on luggage in accordance with a first embodiment of the present invention is shown. The carry-on luggage **1** comprises a housing **2,** a retractable handle **3,** a carrying handle **4,** a bolt lock 5 and a plurality of wheels **6**. The present invention is focused on the reform of the housing **2.**

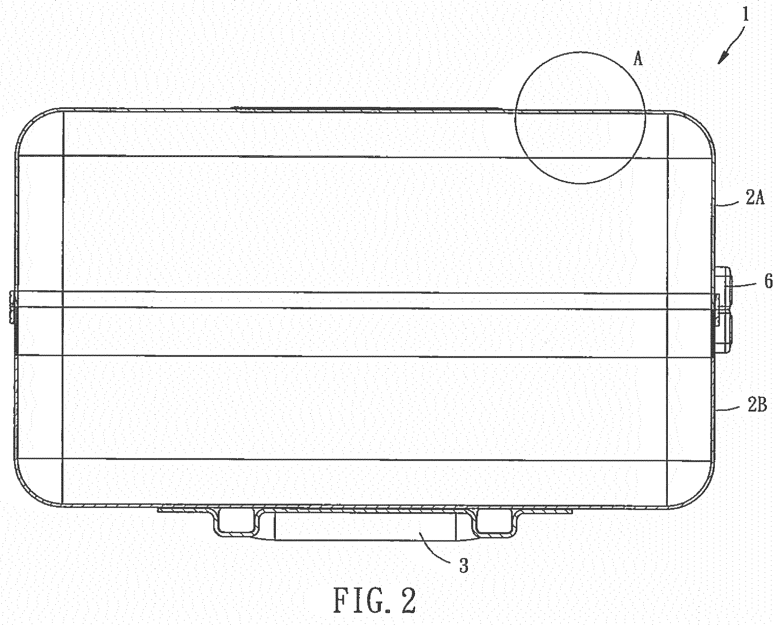

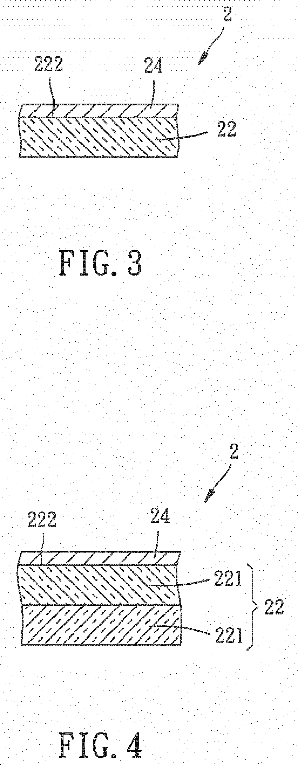

Further details on the housing **2** are given hereinafter. As illustrated in FIGS. 2 and 3, the housing **2** consists of a right half shell **2A** and a left half shell **2B.** The housing **2** is equipped with a zip fastener or the like so that it can be opened or closed. Every half shell comprises a base layer **22** and a protective layer **24.** The base layer **22** is made from a fiber-reinforced thermosetting polymeric material (TS). In fabrication, fibers are mixed in a thermosetting polymeric material (TS), and the mixture is then put in a mold and molded into the desired finished product using vacuum molding technology under a predetermined temperature and pressure. The protective layer **24** is made from a thermoplastic polymeric material (TP) and arranged on an outer surface **222** of the base layer **22.** The protective layer **24** is joined to the base layer **22** using heating, pressuring and vacuum techniques, forming a fixed protective film on the base layer **22.**

In the aforesaid housing 2, in actual practice, the base layer **22** is composed of multiple layers **221** of thermosetting polymeric material (TS), as illustrated in FIG. 4 so that the thickness of the base layer **22** can be increased according to the size of the carry-on luggage **1,** enabling the carry-on luggage **1** to have optimal mechanical strength. Further, the thermosetting polymeric material (TS) can be epoxy or polyester). The fibers can be glass fibers, carbon fibers or artificial fibers. Further, the fibers can be arranged in a uniaxial or braided manner. The thermosetting polymeric material (TS) of the base layer **22** provides the housing **2** with a basic strength. The thermoplastic polymeric material (TP) of the protective layer **24** provides flexibility. Thus, on the one hand, this design enhances the impact resistance of the housing **2,** on the other hand, this design enables the housing **2** to have excellent toughness for dispersing impact force easily so that the carry-on luggage **1** is not easily broken or damaged, and the internal storage items can be well protected.

The protective layer **24** of the aforesaid housing **2** is joined to the base layer **22** using a mold and heating, pressuring and vacuum techniques. Further, the protective layer **24** is arranged on the outer surface **222** of the base layer **22,** enabling the housing **2** to provide a smooth shiny surface. The thermoplastic polymeric material (TP) of the protective layer **24** is selected from the group of acrylonitrile-butadiene-styrene (ABS), polypropylene (PP), polycarbonate (PC), polyethylene (PE), thermoplastic Polyurethane (TPU), polyamide (PA) and their composites, having high tension, tough and wear resistance characteristics.

As described above, the main feature of the present invention is: the base layer **22** that is made by molding using heating, pressuring and vacuum techniques provides the housing **2** a basic strength, and the protective layer **24** that is covered over the outer surface **222** of the base layer **22** enables the housing **2** to have excellent impact resistance and facilitates rapid production of the housing **2**.

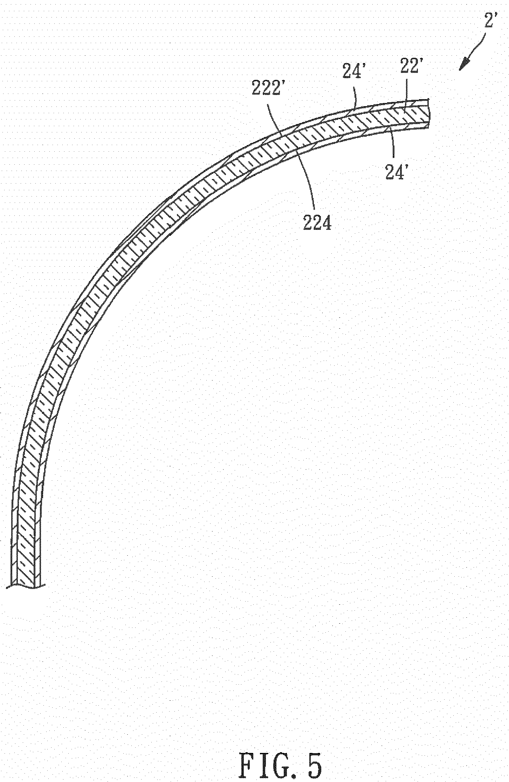

Referring to FIG. 5, a carry-on luggage in accordance with a second embodiment of the present invention is shown. When compared with the aforesaid first embodiment of the present invention, this second embodiment emphasizes a complete internal and external protection of the carry-on luggage **1.** The housing **2**' of this second embodiment comprises a base layer **22'** and two protective layers **24'.** Similar to the aforesaid first embodiment, the base layer **22'** is made from a fiber-reinforced thermosetting polymeric material (TS). In fabrication, fibers are mixed in a thermosetting polymeric material (TS), and the mixture is then put in a mold and molded into the desired finished product using vacuum molding technology under a predetermined temperature and pressure. The protective layer **24'** is made from a thermoplastic polymeric material (TP). Further, the base layer **22'** has an outer surface **222'** and an opposing inner surface **224.** The two protective layers **24'** are respectively molded on the opposing outer surface **222'** and inner surface **224** of the base layer **22'** using heating, pressuring and vacuum techniques, and covered over the overall outer surface **222'** and inner surface **224** of the base layer **22'.** Thus, the design of these two protective layers **24'** can protect the both inner and outer sides of the base layer **22',** enhancing the impact resistance of the housing **2**'.

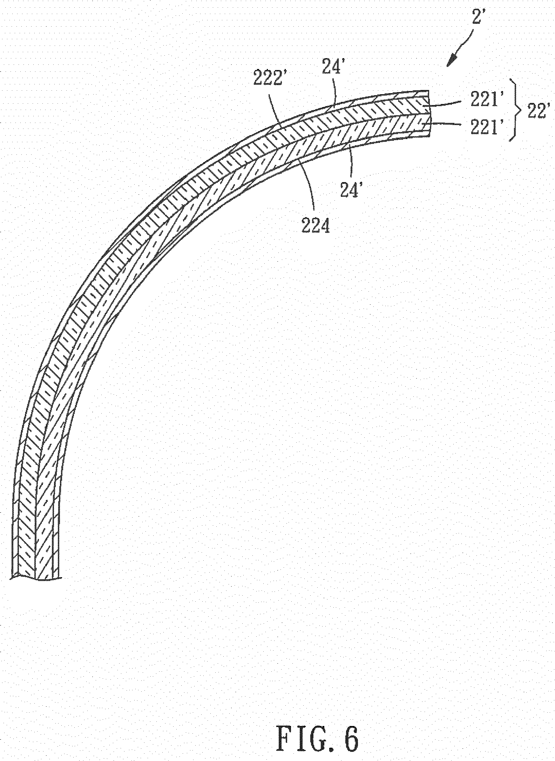

In the aforesaid housing **2**', in actual practice, the base layer **22'** is composed of multiple layers **221'** of thermosetting polymeric material (TS), as illustrated in FIG 6 so that the thickness of the base layer **22**' can be increased according to the size of the carry-on luggage **1,** enabling the carry-on luggage **1** to have optimal mechanical strength. Thus, the thermosetting polymeric material (TS) of the base layer **22'** provides the housing **2**' with a basic strength. The thermoplastic polymeric material (TP) of the protective layer **24**' provides flexibility. Thus, the housing **2'** has enhanced impact resistance and excellent toughness so that the carry-on luggage **1** is not easily broken or damaged, and the internal storage items can be well protected.

In conclusion, the main feature of the present invention is the design of the housing **2(2').** The base layer **22(22')** is made from a thermosetting polymeric material (TS) by molding using heating, pressuring and vacuum techniques. The protective layer **24(24')** is made from a thermoplastic polymeric material (TP) and molded on the base layer **22(22')** and covered over the outer surface **222(222')** or both the outer surface **222'** and inner surface **224** of the base layer **22(22').** Thus, the fabrication of the housing **2(2')** does not require a manual patching step as seen in the prior art design, i.e., the invention allows rapid and mass production of the housing **2(2')** to meet a cost-effectiveness target. Further, the perfect composition of the base layer **22(22')** and the protective layer **24(24')** enables the housing **2(2')** based carry-on luggage **1** to have excellent impact resistance.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A carry-on luggage (1), comprising a housing (2), a plurality of wheels (6) and a handle (3 or 4), wherein:
said housing (2) comprising a base layer (22) made from a thermosetting polymeric material (TS), and a protective layer (24) made from a thermoplastic polymeric material (TP) and covered over at least one surface of said base layer (22).

2. The carry-on luggage (1) as claimed in claim 1, wherein said protective layer (24) is covered over an outer surface (222) of said base layer (22).

3. The carry-on luggage (1) as claimed in claim 1, wherein said housing (2) further comprises a protective layer (24') arranged on an inner surface (224) of said base layer (22).

4. The carry-on luggage (1) as claimed in claim 3, wherein said protective layer (24') is made from a thermoplastic polymeric material (TP).

5. The carry-on luggage (1) as claimed in claim 1, wherein said thermosetting polymeric material (TS) is selected from the group of epoxy and polyester.

6. The carry-on luggage (1) as claimed in claim 1, wherein said base layer (22) has contained therein carbon fibers.

7. The carry-on luggage (1) as claimed in claim 1, wherein said thermoplastic polymeric material (TP) is selected from the group of acrylonitrile-butadiene-styrene (ABS), polypropylene (PP), polycarbonate (PC), polyethylene (PE), thermoplastic Polyurethane (TPU), polyamide (PA) and their composites.

8. The carry-on luggage (1) as claimed in claim 1, wherein said base layer (22) is composed of multiple layers (221).
